(19)

Europäisches
Patentamt
European
Patent Office
Office européen
des brevets

(11) **EP 4 468 055 A1**

(12) **EUROPEAN PATENT APPLICATION**
published in accordance with Art. 153(4) EPC

(43) Date of publication:
**27.11.2024 Bulletin 2024/48**

(51) International Patent Classification (IPC):
*G02B 27/01* (2006.01)

(21) Application number: **22921390.5**

(86) International application number:
**PCT/CN2022/099122**

(22) Date of filing: **16.06.2022**

(87) International publication number:
**WO 2023/137959 (27.07.2023 Gazette 2023/30)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **20.01.2022 CN 202210065963**

(71) Applicant: **Shanghai Raypai Photonic Crystal Ltd.
Shanghai 200240 (CN)**

(72) Inventors:
 • **LI, Yuxue
  Shanghai 200240 (CN)**
 • **ZHANG, Wenjun
  Shanghai 200240 (CN)**

 • **LUO, Hao
  Shanghai 200240 (CN)**
 • **JIN, Jianhu
  Shanghai 200240 (CN)**
 • **LIU, Ying
  Shanghai 200240 (CN)**
 • **YANG, Ming
  Shanghai 200240 (CN)**
 • **LI, Wei
  Shanghai 200240 (CN)**
 • **DU, Jun
  Shanghai 200240 (CN)**

(74) Representative: **PGA S.p.A., Milano, Succursale
di Lugano
Via Castagnola, 21c
6900 Lugano (CH)**

(54) **OPTICAL DISPLAY APPARATUS**

(57)     An optical display apparatus. A coupling apparatus couples light output by an image generation apparatus into an optical expansion waveguide. The optical expansion waveguide at least comprises a first reflective surface array and a second reflective surface array, light entering into the optical expansion waveguide sequentially passing through the first reflective surface array and the second reflective surface array. Each reflective surface array is used for expanding, in an one-dimensional direction, light propagating through the optical expansion waveguide, so that the light entering into the optical expansion waveguide is expanded in a two-dimensional direction and is emitted outside of the optical expansion waveguide to form an image, wherein at least one of a first reflective surface of the first reflective surface array and a second reflective surface of the second reflective surface array is at least partially a curved surface, allowing the angle of emergence of the light to be changed by means of the first reflective surface or/and the second reflective surface, so that the image distance of an image formed by the light emitted by the optical expansion waveguide meets a preset requirement. Therefore, the present invention may change the imaging distance, is applicable to users with abnormal eyesight, and has a light and thin structure.

FIG.1

EP 4 468 055 A1

## Description

The present application claims the priority to Chinese Patent Application No. 202210065963.4, titled "OPTICAL DISPLAY APPARATUS", filed with the China National Intellectual Property Administration on January 20, 2022, the entire disclosure of which is incorporated herein by reference.

## FIELD

The present disclosure relates to the field of optical devices, and in particular to an optical display device.

## BACKGROUND

Near-eye display is a technology field that attracts widespread attention nowadays, and its optical system includes a micro-display and an optical element. At present, there are many different optical solutions for near-eye display on the market.

In an array waveguide solution, a semi-transparent and semi-reflective optical surface is used to achieve light expansion and exit pupil, and according to the reflection law that an incident angle is equal to a reflection angle, there is no dispersion effect on three-primary-color incident light that constitute full-color display. Therefore, the resulting image can be guaranteed to have no obvious color deviation, which can meet most basic requirements of a display device and has obvious advantages in optimizing a design and beautifying an appearance of the head-mounted display.

However, due to the solution has a characteristic that an image is imaged at infinity, the display device applying this solution is suitable for people with a visual acuity of about 1.2, while the visual acuity of the general population (including with corrected vision) is about 1.0. Therefore, when using such a display device, a wearer cannot see a clear and good image, which causes great trouble to the wearer. In order to solve this problem, in a popular solution, an external device is used to assist in adjustment, which not only increases a volume and weight of the display device, but also reduces comfort and feeling experience of a user.

## SUMMARY

In view of this, an object of the present disclosure is to provide an optical display device, which can change an image distance of a resulting image, be applicable to a user with an abnormal vision, and has a thin and light structure.

To achieve the above object, the present disclosure provides the following technical solutions.

An optical display device includes an image generation device, a coupling device and an optical expansion waveguide, where the coupling device corresponds to the image generation device and is configured to couple light output by the image generation device into the optical expansion waveguide;

the optical expansion waveguide includes at least a first reflective surface array and a second reflective surface array, and light entering the optical expansion waveguide passes through the first reflective surface array and the second reflective surface array in sequence, where each reflective surface array of the first reflective surface array and the second reflective surface array is configured to expand light propagating through the optical expansion waveguide in a dimensional direction, such that the light entering the optical expansion waveguide is expanded in two dimensional directions, and emit the light out of the optical expansion waveguide to form an image; and

at least one of first reflective surfaces of the first reflective surface array and second reflective surfaces of the second reflective surface array is at least partially curved, so that an image distance of the image formed by the light emitted from the optical expansion waveguide meets a preset requirement.

Preferably, a first reflective surface of the first reflective surface array is at least partially curved, and enables light reflected by the first reflective surface to diverge; or
a second reflective surface of the second reflective surface array is at least partially curved, and enables light reflected from the second reflective surface to diverge.

Preferably, the first reflective surface array is configured to expand the light propagating through the optical expansion waveguide in a first dimensional direction, and each of the first reflective surfaces forms an inclination angle with respect to the first dimensional direction.

Preferably, the optical expansion waveguide includes a first waveguide substrate, the first reflective surface array is arranged within the first waveguide substrate, the first waveguide substrate includes at least a first set of opposite surfaces, and light entering the first waveguide substrate is reflected on each surface of the first set of opposite surfaces to propagate forward.

Preferably, at least one surface of the first set of opposite surfaces is at least partially curved, to change an incident angle of reflected light from the surface when incident on the first reflective surfaces, so as to assist in achieving that the image distance of the image formed by the light emitted from the optical expansion waveguide meets the preset requirement.

Preferably, at least one surface of the first set of opposite surfaces enables reflected light from the surface to diverge.

Preferably, the optical expansion waveguide includes a second waveguide substrate, the second reflective surface array is arranged within the second waveguide substrate, the second waveguide substrate includes at least a third set of opposite surfaces, and light entering the second waveguide substrate is reflected on each surface of the third set of opposite surfaces to propagate forward.

Preferably, each of the second reflective surfaces forms an inclination angle with respect to any surface of the third set of opposite surfaces.

Preferably, an inclination angle formed by a second reflective surface with respect to a surface, serving as an out-coupling surface, in the third set of opposite surfaces is greater than 0° and less than or equal to 45° where the inclination angle of the second reflective surface with respect to the surface is positive when the second reflective surface rotates counterclockwise with respect to this surface.

Preferably, at least one surface of the third set of opposite surfaces is at least partially curved, to change an incident angle of reflected light from the surface when incident on the second reflective surfaces, so as to assist in achieving that the image distance of the image formed by the light emitted from the optical expansion waveguide meets the preset requirement.

Preferably, at least one surface of the third set of opposite surfaces enables reflected light from the surface to diverge.

Preferably, the optical expansion waveguide includes a first waveguide substrate and a second waveguide substrate, the first reflective surface array is arranged within the first waveguide substrate, and the second reflective surface array is arranged within the second waveguide substrate,

where the first waveguide substrate further includes a first out-coupling surface through which the reflected light of the first reflective surface is emitted out of the first waveguide substrate, and the second waveguide substrate further includes a second in-coupling surface through which the emitted light from the first waveguide substrate enters the second waveguide substrate, where the first out-coupling surface and the second in-coupling surface are optically coaxial.

Preferably, the coupling device is configured to split the light output by the image generation device into a first light beam and a second light beam with different polarization states, and couple the first light beam and the second light beam into the optical expansion waveguide respectively.

Preferably, the coupling device includes a polarizing and splitting component, a light conversion component, a collimation component, and a split-light selection component, where the splitting and polarizing component is configured to split and polarize the light output by the image generation device, the light conversion component is configured to convert polarized light between two different polarization states, the collimation component is configured to collimate light to make a light energy distribution to be uniform, and the split-light selection component is configured to cause light with a corresponding polarization state in light passing through the split-light selection component to be incident to the optical expansion waveguide.

It can be seen from the above technical solutions that the present disclosure provides an optical display device, where the coupling device corresponds to the image generation device and is configured to couple light output by the image generation device into the optical expansion waveguide. The optical expansion waveguide includes at least a first reflective surface array and a second reflective surface array, and light entering the optical expansion waveguide passes through the first reflective surface array and the second reflective surface array in sequence. Each reflective surface array of the first reflective surface array and the second reflective surface array is configured to expand light propagating through the optical expansion waveguide in a dimensional direction, such that the light entering the optical expansion waveguide is expanded in two dimensional directions, and emit the light out of the optical expansion waveguide to form an image. At least one of first reflective surfaces of the first reflective surface array and second reflective surfaces of the second reflective surface array is at least partially curved, so that an image distance of the image formed by the light emitted from the optical expansion waveguide meets a preset requirement Therefore, the optical display device of the present disclosure can change the image distance of the resulting image, be applicable to the user with an abnormal vision, and has a thin and light structure.

## BRIEF DESCRIPTION OF THE DRAWINGS

In order to more clearly illustrate the technical solutions in embodiments of the present disclosure or the existing technologies, the accompanying drawings for use in description of the embodiments or the existing technologies will be briefly introduced below. Apparently, the accompanying drawings described below are only some embodiments of the present disclosure, and other drawings may be obtained by ordinary technicians in this field based on these drawings without creative effort.

FIG. 1 is a schematic diagram of light propagation in a case where a coupling device in an optical display device provided by an embodiment of the present disclosure couples output light of an image generation device into an optical expansion waveguide;

FIG. 2 is a schematic diagram of light propagation on a first reflective surface in an embodiment of the present disclosure;

FIG. 3-1 is a left view of an optical expansion waveguide shown in FIG. 3-2;

FIG. 3-2 is a front view of an optical expansion waveguide provided in an embodiment of the present disclosure;

FIG. 4 is a schematic diagram of light propagation in a first waveguide substrate in an embodiment of the present disclosure;

FIG. 5 is a schematic diagram of light propagation on a surface of a first set of opposite surfaces and a first reflective surface in an embodiment of the present disclosure;

FIG. 6 is a schematic diagram of light propagation in a second waveguide substrate in an embodiment of the present disclosure;

FIG. 7 is a schematic diagram of forming an effective aperture for light propagation in the second waveguide substrate in an embodiment of the present disclosure;

FIG. 8 is a schematic diagram of structural parameters of a reflective surface and a surface, each of which is a curved surface, in any waveguide substrate in an embodiment of the present disclosure;

FIG. 9-1 is a schematic diagram of a curved surface used in any of the opposite surfaces of any waveguide substrate in an embodiment of the present disclosure;

FIG. 9-2 is a schematic diagram of another curved surface used in any of the opposite surfaces of any waveguide substrate in an embodiment of the present disclosure;

FIGs. 10-1 to 10-4 are schematic diagrams of four implementations of a first out-coupling surface of the first waveguide substrate and a second in-coupling surface of the second waveguide substrate in an embodiment of the present disclosure, respectively; and

FIGs. 11-1 to 11-3 are schematic diagrams of three implementations of arrangement positions of the first waveguide substrate and the second waveguide substrate in an embodiment of the present disclosure, respectively.

DETAILED DESCRIPTION OF THE EMBODIMENTS

In order to enable a person skilled in the art to better understand the technical solutions in the present disclosure, the technical solutions in the embodiments of the present disclosure will be described clearly and completely in combination with the accompanying drawings in the embodiments of the present disclosure as below. Apparently, the described embodiments are only part of the embodiments of the present disclosure, not all of them. Based on the embodiments of the present disclosure, all other embodiments obtained by the ordinary person skilled in the art without creative effort should fall within the protection scope of the present disclosure.

An optical display device is provided in the present embodiment, including an image generation device, a coupling device, and an optical expansion waveguide, where the coupling device corresponds to the image generation device and is configured to couple light output by the image generation device into the optical expansion waveguide.

The optical expansion waveguide includes at least a first reflective surface array and a second reflective surface array, and light entering the optical expansion waveguide passes through the first reflective surface array and the second reflective surface array in sequence, where each of the first reflective surface array and the second reflective surface array is configured to expand light propagating through the optical expansion waveguide in a dimensional direction, so as to achieve expansion of the light entering the optical expansion waveguide in two dimensional directions, and emit light out of the optical expansion waveguide to form an image.

At least one of first reflective surfaces of the first reflective surface array and second reflective surfaces of the second reflective surface array is at least partially curved, so that an image distance of the image formed by light emitted from the optical expansion waveguide meets a preset requirement.

The light entering the optical expansion waveguide propagates through the optical expansion waveguide, passes through the first reflective surface array and the second reflective surface array in sequence, so as to achieve the expansion of the light entering the optical expansion waveguide in two dimensional directions, and emit the light out of the optical expansion waveguide. The emitted light enters a user's eyes, so that the user can view the image.

The image distance of the image formed by the light emitted from the optical expansion waveguide refers to a distance from a virtual image corresponding to an image formed by the light emitted from the optical expansion waveguide to a viewing position.

Here, if a first reflective surface is at least partially curved, a reflective angle of light on the first reflective surface may be changed due to a curved surface, and an emission angle of light emitted from the optical expansion waveguide may be changed. If a second reflective surface is at least partially curved, a reflective angle of light on the second reflective surface may be changed due to a curved surface, and the emission angle of the light emitted from the optical expansion waveguide may be changed. Therefore, by setting at least one of the first reflective surfaces and the second reflective surfaces to be curved, the optical expansion waveguide can change the emission angle of the emitted light, change the image distance of the image formed by the output light of the optical display device, and enable the image distance to meet the preset requirement.

Therefore, the optical display device of the present embodiment can change the image distance of the resulting image, can be applicable to the user with an abnormal vision, so that the user with an abnormal vision can see a clear and good image, and the optical expansion waveguide structure in the optical display device of the present embodiment is thin and light.

The image generation device is configured to output light carrying image information. In the present embodiment, a type and a structure of the image generation device are not specifically limited. Preferably, considering an overall weight and volume of the optical display device, a miniaturized display chip may be used in the image generation device, which may be, but not limited to, a Liquid Crystal on Silicon (LOCS) display screen, a Liquid Crystal Display (LCD) display screen, an Organic Light-Emitting Diode (OLED) display screen, a microLED display screen, a miniLED display screen, or a Digital Light Processing (DLP) display screen.

In practical applications, according to different application scenarios, while considering lightweight and miniaturization of a head-mounted display device, factors such as a uniformity of brightness at each point of an image source, an output light effect, brightness requirements, and limitations in resolution and size, are also balanced, and an image generation device with a suitable volume, uniform brightness, and high resolution is selected.

Preferably, the coupling device is configured to split the light output by the image generation device into a first light beam and a second light beam with different polarization states, and couple the first light beam and the second light beam into the optical expansion waveguide respectively. The output light of the image generation device is split and polarized by the coupling device, and is coupled into the optical expansion waveguide respectively to propagate and expand through the optical expansion waveguide, which helps to enable the brightness of the image formed by the output light to be uniform.

Optionally, the coupling device may include a polarizing and splitting component, a light conversion component, a collimation component, and a split-light selection component, where the splitting and polarizing component is configured to split and polarize the light output by the image generation device, the light conversion component is configured to convert polarized light between two different polarization states, the collimation component is configured to collimate light to make a light energy distribution to be uniform, and the split-light selection component is configured to cause light with a corresponding polarization state in light passing through the split-light selection component to be incident to the optical expansion waveguide. Thus, the output light of the image generation device is split and polarized by the coupling device, and the obtained light is respectively coupled to the optical expansion waveguide, such that energy distribution of each obtained light respectively coupled to the optical expansion waveguide is uniform.

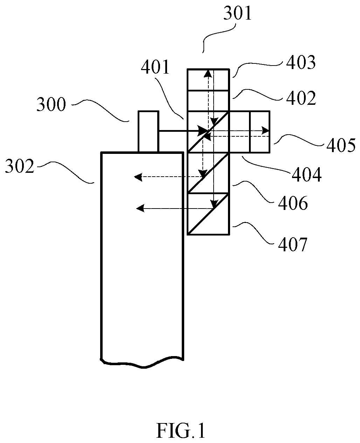

In the present embodiment, a specific optical structure of the coupling device is not limited, as long as coupling of the light output by the image generation device into the optical expansion waveguide can be realized. For example, reference may be made to FIG. 1, which is a schematic diagram of light propagation in a case where a coupling device couple the output light of an image generation device into an optical expansion waveguide in an optical display device provided in an embodiment. As shown in the figure, the coupling device 301 includes a polarizing and splitting component 401, a first light conversion component 402, a first collimation component 403, a second light conversion component 404, a second collimation component 405, a first splitting selection component 406 and a second splitting selection component 407.

The splitting and polarizing component 401 splits the output light of the image generation device 300 into a first polarization-state light and a second-state polarization light. The first polarization-state light is reflected and passes through the first light conversion component 402 and the first collimation component 403 in sequence. The first collimation component 403 collimates and reflects light, so that this reflected light passes through the first light conversion component 402 twice and is converted into the second polarization-state light. The converted second polarization light is transmitted through the splitting and polarizing component 401 and incident on the first split-light selection component 406, and is reflected to the optical expansion waveguide 302.

The second polarization-state light split by the splitting and polarizing component 401 is transmitted, and is incident on the second light conversion component 404 and the second collimation component 405 in sequence. The second collimation component 405 collimates and reflects the light, so that this reflected light passes through the second light conversion component 404 twice and is converted into the first polarization-state light. The converted first polarization-state light is reflected through the splitting and polarizing component 401, and is reflected to the optical expansion waveguide 302 when incident on the second split-light selection component 407. Vibration directions of the first polarization-state light and the second polarization-state light are perpendicular to each other, and these two lights may be P light and S light respectively.

It should be noted that the coupling device shown in FIG. 1 is only used as an embodiment, which is taken as an example. In other embodiments, the coupling device may adopt other optical structures, which should be within the protection scope of the present disclosure as well.

Implementations of the optical expansion waveguide of the optical display device are described below.

If a first reflective surface of the first reflective surface array is at least partially curved, in the present embodiment, a shape of the curved surface and an area size of the curved surface included in the first reflective surface are not specifically limited, as long as the emission angle of the light emitted from the optical expansion waveguide can be changed such that the image distance of the image formed by the light emitted from the optical expansion waveguide meets the preset requirement. The curved surface included in the first reflective surface may be a curved surface with a fixed curvature or a free-form curved surface. Optionally, if the first reflective surface is a curved surface, it may cause the light reflected by the first reflective surface to diverge or converge.

If a second reflective surface of the second reflective surface array is at least partially curved, in the present embodiment, a shape of the curved surface and an area size of the curved surface area included in the second reflective surface are not specifically limited, as long as the emission angle of the light emitted from the optical expansion waveguide can be changed such that the image distance of the image formed by the light emitted from the optical expansion waveguide e meets the preset requirement. The curved surface included in the second reflective surface may be a curved surface with a fixed curvature or a free-form curved surface. Optionally, if the second reflective surface is a curved surface, it can cause the light reflected by the second reflective surface to diverge or converge.

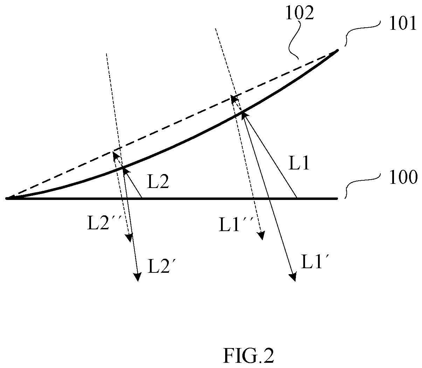

For example, reference may be made to FIG. 2. FIG. 2 is a schematic diagram of light propagation on a first reflective surface in an embodiment. As shown in the figure, light L1 and light L2 reflected by a waveguide surface 100 are respectively incident on a first reflective surface 101, and the first reflective surface 101 is a curved surface. Reflected lights L1'and L2'are formed through the first reflective surface 101. Compared with the reflected lights L1"and L2" , formed through a reference plane 102 of the first reflective surface 101, of the lights L1 and L2, the reflected lights L1'and L2' become divergent. This reduces the image distance of the image formed by the light emitted from the optical expansion waveguide. For the user with an abnormal vision, the resulting image can be converged on the retina of the user with an abnormal vision.

Based on FIG. 2, the above-mentioned light propagation on the first reflective surface is taken as an example to illustrate a principle in which a curved surface is used as the first reflective surface to change the image distance. Similarly, a change of the image distance is achieved by a second reflective surface provided as a curved surface based on the above principle.

The first reflective surface array is configured to expand the light propagating through the optical expansion waveguide in the first dimensional direction, and an inclination angle is formed by each of first reflective surfaces with respect to the first dimensional direction. The inclination angle being formed by the first reflective surface with respect to the first dimensional direction refers to the chord of the first reflective surface is not parallel and not perpendicular to the first dimensional direction. Correspondingly, the inclination angle formed by the first reflective surface with respect to the first dimensional direction refers to an angle between the chord of the first reflective surface and the first dimensional direction. When the light propagating through the optical expansion waveguide is incident on the first reflective surface, part of the light energy is transmitted through the first reflective surface and continues to propagate, and part of the light energy is reflected, such that the first reflective surface array enables the light propagating through the optical expansion waveguide to expand in the first dimensional direction.

In this embodiment, a degree of the inclination angle formed by each first reflective surface with respect to the first dimensional direction is not limited, as long as the light propagating through the optical expansion waveguide expands in the first dimensional direction. In practical applications, it can be set according to a size of the optical expansion waveguide and expansion requirements for the light in the first dimensional direction. It is preferred to provide the optical expansion waveguide with a thin and light structure while meeting the expansion requirements for the light.

A projection surface of the first reflective surface on a plane parallel to the first dimensional direction determines an aperture of the emitted light of the optical expansion waveguide in the first dimensional direction, where the plane parallel to the first dimensional direction is located at a side, from which the reflected light is emitted, of the first reflective surface. In the optical display device, the aperture of the emitted light of the optical expansion waveguide in the first dimensional direction is required to ensure that an image from the image generation device can be fully expanded, that is, the image formed by the emitted light of the optical expansion waveguide contains complete information of the image in the first dimensional direction.

Optionally, the optical expansion waveguide may include a first waveguide substrate, and the first reflective surface array is arranged in the first waveguide substrate. The first waveguide substrate includes at least a first set of opposite surfaces, and the light entering the first waveguide substrate is reflected on each surface of the first set of opposite surfaces to propagate forward. Specifically, the light incident on each surface of the first set of opposite surfaces meets the total reflection condition. Surfaces of the first set of opposite surfaces may be parallel or non-parallel to each other, as long as the light can be reflected on each surface of the first set of opposite surfaces to propagate forward.

Preferably, the first waveguide substrate may further include a second set of opposite surfaces, where the second set of opposite surfaces and the first set of opposite surfaces form a closed section, and the light entering the first waveguide substrate is reflected on each surface of the first set of opposite surfaces and the second set of opposite surfaces to propagate forward. Specifically, light incident on each surface of the second set of opposite surfaces meets the total reflection condition. Surfaces of the second set of opposite surfaces may be parallel to each other or may not be parallel, as long as the light can be reflected on each surface of the second set of opposite surfaces to propagate forward.

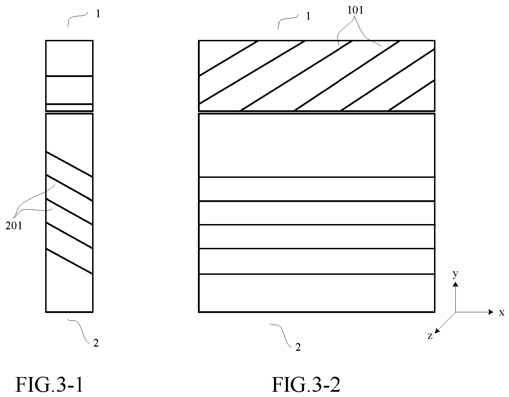

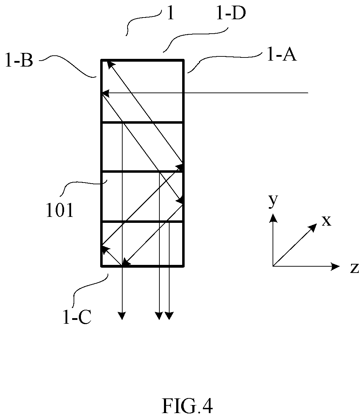

For example, reference may be made to FIGs. 3-1, 3-2 and 4. FIG. 3-1 is a left view of the optical expansion waveguide as shown in FIG. 3-2, FIG. 3-2 is a front view of the optical expansion waveguide provided in an embodiment, and FIG. 4 is a schematic diagram of the light propagation in the first waveguide substrate in an embodiment. As shown in the figures, the light entering the first waveguide substrate 1 will be reflected on each surface of four surfaces 1-A, 1-B, 1-C and 1-D of the first waveguide substrate 1 and propagated forward, as shown in a cross section formed by these four surfaces. Upon reaching the first reflective surface 101 during the propagation, a part of the light energy is reflected at a certain energy ratio, and then coupled into the second waveguide substrate 2.

In the first waveguide substrate 1 shown in FIG. 4, illustration is made by taking a case in which surfaces of the first set of opposite surfaces, i.e., 1-A and 1-B, are parallel to each other and surfaces of the second set of opposite surfaces, i.e., 1-C and 1-D, are parallel to each other as an example. It can be understood that FIG. 4 is only an example. In other embodiments, the surfaces of the first set of opposite surfaces may not be parallel, and the surfaces of the second set of opposite surfaces may not be parallel.

In a preferred embodiment, at least one surface of the first set of opposite surfaces is at least partially curved, so as to change an incident angle of the reflected light on the surface when incident on the first reflective surfaces, to assist in achieving that the image distance of the image formed by the light emitted from the optical expansion waveguide meets the preset requirement. If at least one surface of the first set of opposite surfaces is at least partially curved, a reflective angle of the light obtained through the surface may be changed, and an incident angle of the reflected light from the surface when incident on the first reflective surfaces may be changed, thereby assisting in changing the image distance of the image formed by the light emitted from the present optical expansion waveguide in combination with a first reflective surface provided as a curved surface or a second reflective surface provided as a curved surface.

In the present embodiment, a shape of the curved surface and an area size of the curved surface included in any surface of the first set of opposite surfaces are not specifically limited, as long as the emission angle of the light emitted from the optical expansion waveguide can be changed such that the image distance of the image formed by the light emitted from the optical expansion waveguide meets the preset requirement. The curved surface included in any surface of the first set of opposite surfaces may be a curved surface with a fixed curvature or a free-form curved surface. Optionally, the curved surface included in any surface of the first set of opposite surfaces may cause the reflected light of the surface to diverge or converge.

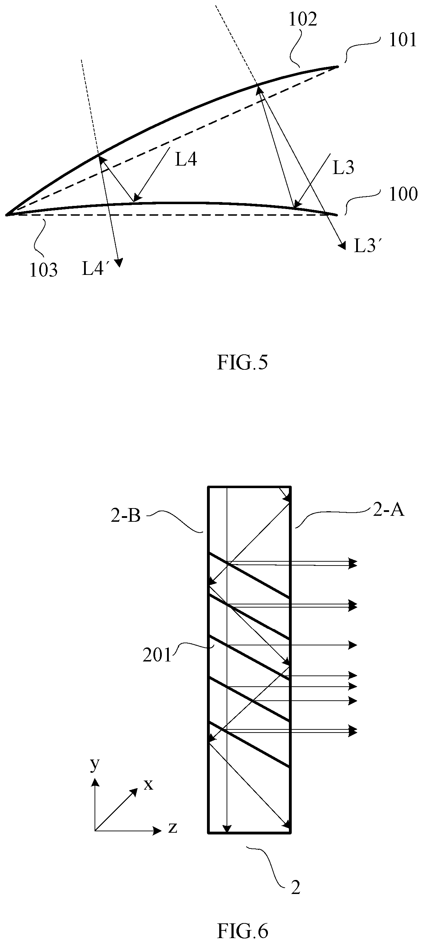

For example, reference may be made to FIG. 5. FIG. 5 is a schematic diagram of light propagation on a surface of a first set of opposite surfaces and a first reflective surface in an embodiment. As shown in the figure, a surface 100 is any surface of the first set of opposite surfaces of the first waveguide substrate 1, and the surface 100 is a curved surface (its reference plane is surface 103), so that the reflected lights of incident lights L3 and L4 on the surface 100 become divergent, the reflected lights L3' and L4' obtained after lights being reflected by the first reflective surface 101 become divergent, and an image distance of an image formed by the light emitted from the optical expansion waveguide is finally reduced.

Optionally, the optical expansion waveguide may include a second waveguide substrate, and the second reflective surface array is arranged in the second waveguide substrate. The second waveguide substrate includes at least a third set of opposite surfaces, and light entering the second waveguide substrate is reflected on each surface of the third set of opposite surfaces to propagate forward. Specifically, the light incident on each surface of the third set of opposite surfaces meets the total reflection condition. Surfaces of the third set of opposite surfaces may be parallel or non-parallel to each other, as long as the light can be reflected by each surface of the third set of opposite surfaces to propagate forward.

Optionally, each of the second reflective surfaces forms an inclination angle with respect to any surface of the third set of opposite surfaces. If an inclination angle is formed by a second reflective surface with respect to a surface, it means that the chord of the second reflective surface is not parallel and not perpendicular to the surface, and correspondingly, the inclination angle formed by the second reflective surface with respect to the surface refers to an angle between the chord of the second reflective surface and the surface. If a surface is a curved surface, an inclination angle of a second reflective surface with respect to the surface refers to an angle between the chord of the second reflective surface and the chord of the surface. When the light propagating through the second waveguide substrate is incident on the second reflective surface, part of the light energy is transmitted through the second reflective surface and continues to propagate, and part of the light energy is reflected and emitted out of the second waveguide substrate, thus forming the emitted light from the optical expansion waveguide .

For example, reference may be made to FIGs. 3-1, 3-2 and 6. FIG. 6 is a schematic diagram of the light propagation in the second waveguide substrate in an embodiment. As shown in the figures, the light coupled into the second waveguide substrate 2 from the first waveguide substrate 1 may be reflected on the surfaces 2-A and 2-B of the second waveguide substrate 2 to propagate forward. When light reaches the second reflective surfaces 201 during the propagation, part of the light energy is reflected at a certain energy ratio, such that part of the light is emitted out of the second waveguide substrate 2.

In the present embodiment, a degree of an inclination angle of each of the second reflective surfaces with respect to any surface of the third set of opposite surfaces is not limited, as long as it is possible to achieve that when the light propagating in the second waveguide substrate is incident on the second reflective surface, at least part of the light is reflected and emitted out of the second waveguide substrate. In practical applications, it may be set according to the size of the first waveguide substrate, the size of the second waveguide substrate, and the expansion requirements for the light in the second dimensional direction.

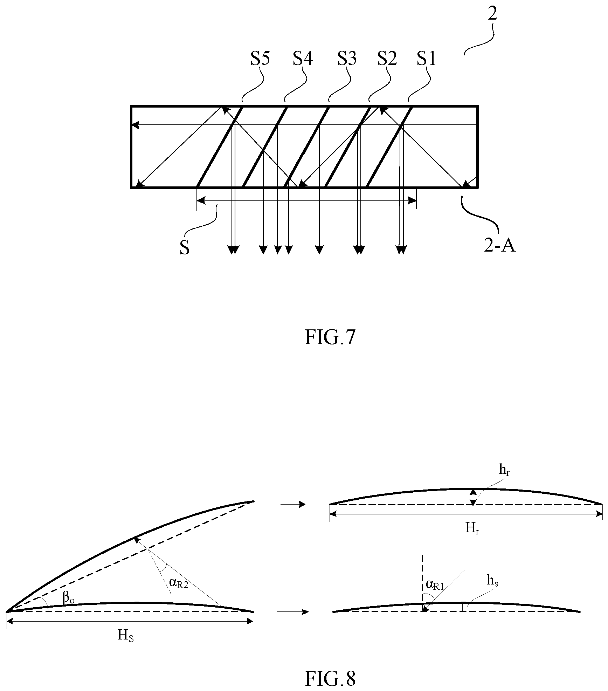

For example, reference may be made to FIG. 7, which is a schematic diagram of forming an effective aperture by the light propagation in the second waveguide substrate in an embodiment. The light propagating through the second waveguide substrate 2 is reflected when reaching each second reflective surface S1, S2, S3, S4 and S5, so that at least part of the light is emitted out of the second waveguide substrate 2. A total projection surface S of the second reflective surface S1, S2, S3, S4 and S5 on the surface 2-A determines the effective aperture of the optical expansion waveguide. In the optical display device, the effective aperture of the optical expansion waveguide is required to ensure that an image from an image source may be fully expanded, that is, the image formed by the emitted light of the optical expansion waveguide contains complete information of the image in the first and second dimensional directions.

Preferably, an inclination angle of the second reflective surface with respect to a surface, serving as an out-coupling surface, in the third set of opposite surfaces is greater than 0° and less than or equal to 45°, which may be expressed as 0°<β≤45°, where, the inclination angle of the second reflective surface with respect to the surface is positive when the second reflective surface rotates counterclockwise with respect to this surface. The surface, serving as the out-coupling surface, in the third set of opposite surfaces refers to a surface through which the light reflected by the second reflective surface is emitted out of the second waveguide substrate. In this way, the light is expanded through the second reflective surface, while a thickness of the second waveguide substrate may be reduced, and the entire waveguide may be thin and light.

In a preferred embodiment, at least one surface of the third set of opposite surfaces is at least partially curved, to change an incident angle of the reflected light of the surface when incident on the second reflective surfaces, so as to assist in achieving that an image distance of an image formed by the light emitted from the optical expansion waveguide meets the preset requirement. At least one surface of the third set of opposite surfaces is at least partially curved, a reflective angle of the light may be changed through the surface, and an incident angle of the reflected light from the surface when incident on the second reflective surfaces may be changed, thereby achieving to change the image distance of the image formed by the light exiting the optical expansion waveguide in combination with a first reflective surface provided as a curved surface or a second reflective surface provided as a curved surface.

In the present embodiment, a shape of the curved surface and an area size of the curved surface included in any surface of the third set of opposite surfaces are not specifically limited, as long as an emission angle of the light emitted from the optical expansion waveguide can be changed such that the image distance formed by the light emitted from the optical expansion waveguide meets the preset requirement. The curved surface included in any surface of the third set of opposite surfaces may be a curved surface with a fixed curvature or a free-form curved surface. Optionally, the curved surface included in any surface of the third set of opposite surfaces can cause the light reflected by the surface to diverge or converge.

During optical design, in order that resolution, contrast, clarity, or the like of a resulting image meet requirements, if a first reflective surface of the first waveguide substrate is a curved surface and at least one surface of the first set of opposite surfaces is a curved surface, curved surface parameters of the first reflective surface of the first waveguide substrate and any surface of the first set of opposite surfaces should satisfy a certain relationship. If a second reflective surface of the second waveguide substrate is a curved surface and at least one surface of the third set of opposite surfaces is a curved surface, curved surface parameters of the second reflective surface of the second waveguide substrate and any surface of the third set of opposite surfaces should satisfy a certain relationship. Reference may be made to FIG. 8, which is a schematic diagram of structural parameters of a reflective surface and a surface, each being a curved surface, in any waveguide substrate in an embodiment. The optical design is performed with reference to the collimated main axis beam emitted by an on-axis object point. When the main axis beam is vertically incident on an in-coupling surface of the waveguide substrate, a corresponding relationship between various parameters is as follows:

$$\alpha_{R2} = \alpha_{R1} - \beta_o;$$

$$\alpha_{R1} = \pi/2 - \beta_i;$$

where $\beta_\iota$ represents an angle between the in-coupling surface and a horizontal reference plane of a surface of the waveguide substrate, $\beta_o$ represents an angle between a plane where the chord of the curved reflective surface is located and the horizontal reference plane of the surface of the waveguide substrate, $\alpha_{R1}$ represents an angle between main-axis light and a normal of the horizontal reference plane of the surface of the waveguide substrate, and $\alpha_{R2}$ represents an angle between the main-axis light and a normal of a reference plane of the out-coupling surface; and

$$h_s = h_r = N*(\lambda/2);$$

$$H_r = H/(\sin(\beta_o));$$

$$H_s = H/(\tan(\beta_o));$$

where $h_s$ represents a partially-curved surface sag of a curved waveguide corresponding to a single reflective surface, $H_s$ represents a curved-part chord length of the curved waveguide corresponding to the single reflective surface, $h_r$ represents a partially-curved surface sag corresponding to the curved reflective surface itself, $H_r$ represents a curved-part chord length corresponding to the curved reflective surface itself, N is F-number for adjustment according to an image distance, and $\lambda$ is a reference wavelength selected during optical design. According to adjustment requirements of a specific image distance, calculation can be made based on a corresponding sag and chord length, and thus it is possible to obtain a required curved-part curvature of the curved reflective surface and a required curved-part curvature radius of the curved surface of the waveguide substrate.

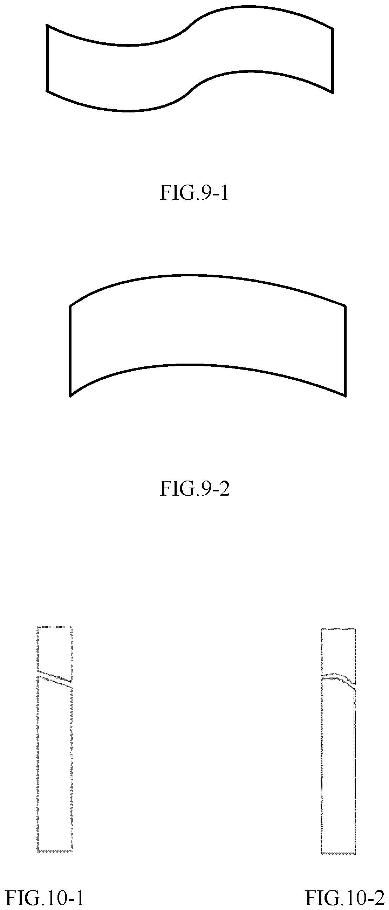

For example, reference may be made to FIGs. 9-1 and 9-2, which are schematic diagrams of curved surfaces used in any surface of the opposite surfaces of any waveguide substrate in the present embodiment respectively. As shown in the figures, any surface of the opposite surfaces of the waveguide substrate may be a free-form surface, a concave surface or a convex surface.

Further, the first waveguide substrate further includes a first out-coupling surface through which the reflected light of the first reflective surface is emitted out of the first waveguide substrate, and the second waveguide substrate further includes a second in-coupling surface through which the emitted light from the first waveguide substrate enters the second waveguide substrate. The first out-coupling surface and the second in-coupling surface are optically coaxial. The first out-coupling surface and the second in-coupling surface being optically coaxial means that an optical axis of a part of the first out-coupling surface and an optical axis of a corresponding part of the second in-coupling surface are parallel.

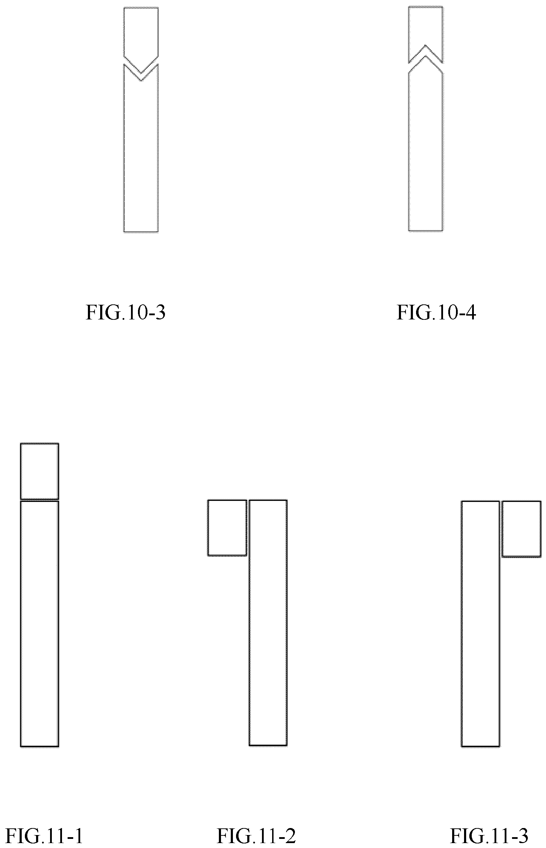

In the present embodiment, a shape of the first out-coupling surface of the first waveguide substrate is not limited, and a shape of the second in-coupling surface of the second waveguide substrate is not limited, as long as the first out-coupling surface and the second in-coupling surface are optically coaxial. The first out-coupling surface may be, but not limited to, a plane, an inclined plane, a serrated surface, or a curved surface, and the second in-coupling surface may be, but not limited to, a plane, an inclined plane, a serrated surface, or a curved surface. For example, reference may be made to FIGs. 10-1 to 10-4, which show four implementations of the first out-coupling surface of the first waveguide substrate and the second in-coupling surface of the second waveguide substrate in the present embodiment, respectively.

In the present embodiment, a relative position of the first waveguide substrate and the second waveguide substrate is not limited, as long as the light emitted from the first waveguide substrate for in-coupling can enter the second waveguide substrate. For example, reference may be made to FIGs. 11-1 to 11-3, which show three implementations of arrangement positions of the first waveguide substrate and the second waveguide substrate of the present embodiment, respectively. As shown in the figures, the first waveguide substrate 1 may be placed in front of, behind or above the second waveguide substrate 2.

The optical display device of the present embodiment may be a near-eye display device, such as a head-mounted device, which can change the image distance of the resulting image, be applicable for the user with an abnormal vision, and has a thin and light structure, which improves the comfort and feeling experience of the user.

An optical display device provided by the present disclosure has been introduced in details as above. Specific examples are used herein to set forth the principles and implementations of the present disclosure, and the description of the above embodiments is only used to help in understanding the method and core idea of the present disclosure. It should be pointed out that, for ordinary technicians in this field, without departing from the principles of the present disclosure, several improvements and modifications can be made to the present disclosure, and these improvements and modifications also fall within the claimed protection scope of the present disclosure.

**Claims**

1. An optical display device, comprising an image generation device, a coupling device and an optical expansion waveguide, wherein the coupling device corresponds to the image generation device and is configured to couple light output by the image generation device into the optical expansion waveguide;

the optical expansion waveguide comprises at least a first reflective surface array and a second reflective surface array, and light entering the optical expansion waveguide passes through the first reflective surface array and the second reflective surface array in sequence, wherein each reflective surface array of the first reflective surface array and the second reflective surface array is configured to expand light propagating through the optical expansion waveguide in a dimensional direction, such that the light entering the optical expansion waveguide is expanded in two dimensional directions, and emit the light out of the optical expansion waveguide to form an image; and
at least one of first reflective surfaces of the first reflective surface array and second reflective surfaces of the second reflective surface array is at least partially curved, so that an image distance of the image formed by the light emitted from the optical expansion waveguide meets a preset requirement.

2. The optical display device according to claim 1, wherein a first reflective surface of the first reflective surface array is at least partially curved, and enables light reflected by the first reflective surface to diverge; or
a second reflective surface of the second reflective surface array is at least partially curved, and enables light reflected from the second reflective surface to diverge.

3. The optical display device according to claim 1, wherein the first reflective surface array is configured to expand the light propagating through the optical expansion waveguide in a first dimensional direction, and each of the first reflective surfaces forms an inclination angle with respect to the first dimensional direction.

4. The optical display device according to claim 1, wherein the optical expansion waveguide comprises a first waveguide substrate, the first reflective surface array is arranged within the first waveguide substrate, the first waveguide substrate comprises at least a first set of opposite surfaces, and light entering the first waveguide substrate is reflected on each surface of the first set of opposite surfaces to propagate forward.

5. The optical display device according to claim 4, wherein at least one surface of the first set of opposite surfaces is at least partially curved, to change an incident angle of reflected light from the surface when incident on the first reflective surfaces, so as to assist in achieving that the image distance of the image formed by the light emitted from the optical expansion waveguide meets the preset requirement.

6. The optical display device according to claim 5, wherein at least one surface of the first set of opposite surfaces enables reflected light from the surface to diverge.

7. The optical display device according to claim 1, wherein the optical expansion waveguide comprises a second waveguide substrate, the second reflective surface array is arranged within the second waveguide substrate, the second waveguide substrate comprises at least a third set of opposite surfaces, and light entering the second waveguide substrate is reflected on each surface of the third set of opposite surfaces to propagate forward.

8. The optical display device according to claim 7, wherein each of the second reflective surfaces forms an inclination angle with respect to any surface of the third set of opposite surfaces.

9. The optical display device according to claim 8, wherein an inclination angle formed by a second reflective surface with respect to a surface, serving as an out-coupling surface, in the third set of opposite surfaces is greater than 0° and less than or equal to 45° wherein the inclination angle of the second reflective surface with respect to the surface is positive when the second reflective surface rotates counterclockwise with respect to this surface.

10. The optical display device according to claim 7, wherein at least one surface of the third set of opposite surfaces is at least partially curved, to change an incident angle of reflected light from the surface when incident on the second reflective surfaces, so as to assist in achieving that the image distance of the image formed by the light emitted from the optical expansion waveguide meets the preset requirement.

11. The optical display device according to claim 10, wherein at least one surface of the third set of opposite surfaces enables reflected light from the surface to diverge.

12. The optical display device according to claim 1, wherein the optical expansion waveguide comprises a first waveguide substrate and a second waveguide substrate, the first reflective surface array is arranged within the first waveguide substrate, and the second reflective surface array is arranged within the second waveguide substrate,
wherein the first waveguide substrate further comprises a first out-coupling surface through which the reflected light of the first reflective surface is emitted out of the first waveguide substrate, and the second waveguide substrate further comprises a second in-coupling surface through which the emitted light from the first waveguide substrate enters the second waveguide substrate, wherein the first out-coupling surface and the second in-coupling surface are optically coaxial.

13. The optical display device according to any one of claims 1 to 12, wherein the coupling device is configured to split the light output by the image generation device into a first light beam and a second light beam with different polarization states, and couple the first light beam and the second light beam into the optical expansion waveguide respectively.

14. The optical display device according to claim 13, wherein the coupling device comprises a polarizing and splitting component, a light conversion component, a collimation component, and a split-light selection component, wherein the splitting and polarizing component is configured to split and polarize the light output by the image generation device, the light conversion component is configured to convert polarized light between two different polarization states, the collimation component is configured to collimate light to make a light energy distribution to be uniform, and the split-light selection component is configured to cause light with a corresponding polarization state in light passing through the split-light selection component to be incident to the optical expansion waveguide.

FIG.1

FIG.2

FIG.3-1

FIG.3-2

FIG.4

FIG.5

FIG.6

FIG.7

FIG.8

FIG.9-1

FIG.9-2

FIG.10-1                    FIG.10-2

FIG.10-3                    FIG.10-4

FIG.11-1            FIG.11-2            FIG.11-3

## INTERNATIONAL SEARCH REPORT

| International application No. |
| --- |
| **PCT/CN2022/099122** |

### A. CLASSIFICATION OF SUBJECT MATTER

G02B 27/01(2006.01)i

According to International Patent Classification (IPC) or to both national classification and IPC

### B. FIELDS SEARCHED

Minimum documentation searched (classification system followed by classification symbols)

G02B

Documentation searched other than minimum documentation to the extent that such documents are included in the fields searched

Electronic data base consulted during the international search (name of data base and, where practicable, search terms used)

CNABS; CNTXT; CNKI; VEN; ENTXT: 头戴, 头显, 显示, 近视, 远视, 视力, 视度, 屈光, 反射, 阵列, 光波, 波导, 曲面, 弯曲, HMD, head, mount+, display, myopia, hyperopia, diopter, dioptre, reflect, array, light, wave, guide, bend, curve

### C. DOCUMENTS CONSIDERED TO BE RELEVANT

| Category* | Citation of document, with indication, where appropriate, of the relevant passages | Relevant to claim No. |
| --- | --- | --- |
| PX | CN 114236852 A (SHANGHAI RAYPAI TECH INC.) 25 March 2022 (2022-03-25) claims 1-14 | 1-14 |
| Y | CN 108983425 A (SHENZHEN LOCHN OPTICS TECHNOLOGY CO., LTD.) 11 December 2018 (2018-12-11) description, paragraphs [0017]-[0048], and figures 1-3 | 1-14 |
| Y | CN 104656258 A (SHANGHAI RAYPAI TECH INC.) 27 May 2015 (2015-05-27) description, paragraphs [0013]-[0043], and figures 1-10 | 1-14 |
| Y | CN 213780421 U (GOERTEK INC.) 23 July 2021 (2021-07-23) description, paragraphs [0031]-[0046], and figures 1-3 | 1-14 |
| Y | US 2009322653 A1 (SAMSUNG ELECTRONICS CO., LTD.) 31 December 2009 (2009-12-31) description, paragraphs [0035]-[0069], and figures 1-6 | 1-14 |
| A | KR 20210075363 A (KOREA ELECTRONICS TECHNOLOGY INSTITUTE) 23 June 2021 (2021-06-23) entire document | 1-14 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **20 September 2022** | **09 October 2022** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2022/099122**

| Patent document cited in search report | | | Publication date (day/month/year) | Patent family member(s) | | | Publication date (day/month/year) |
|---|---|---|---|---|---|---|---|
| CN | 114236852 | A | 25 March 2022 | None | | | |
| CN | 108983425 | A | 11 December 2018 | WO | 2020042635 | A1 | 05 March 2020 |
| | | | | CN | 208569194 | U | 01 March 2019 |
| CN | 104656258 | A | 27 May 2015 | CN | 104656258 | B | 16 June 2017 |
| CN | 213780421 | U | 23 July 2021 | None | | | |
| US | 2009322653 | A1 | 31 December 2009 | EP | 2138886 | A2 | 30 December 2009 |
| | | | | EP | 2138886 | A3 | 05 October 2011 |
| | | | | KR | 20100002085 | A | 06 January 2010 |
| | | | | RU | 2427015 | C2 | 20 August 2011 |
| KR | 20210075363 | A | 23 June 2021 | KR | 102349597 | B1 | 11 January 2022 |

Form PCT/ISA/210 (patent family annex) (January 2015)

**EP 4 468 055 A1**

**Patent documents cited in the description**

- CN 202210065963